# DEMANDE DE BREVET EUROPEEN

(11) **EP 2 687 134 A1**
(43) Date de publication de la demande: **22.01.2014**
(21) Numéro de dépôt: 13177283.2
(22) Date de dépôt: 19.07.2013
(51) Int. Cl.: A47J 37/06

(54) **Surface à griller, et grill comportant une base et ladite surface à griller**

(30) Priorité: 19.07.2012 CH 10992012
(71) Demandeur: Traitements Thermiques S.A., 3960 Sierre (CH)
(72) Inventeur: Burkard, Pascal, 3115 Gerzensee (CH)
(74) Mandataire: P&TS SA (AG, Ltd.)

(57) **Abrégé**

Grill de table comportant :
un premier plateau (10) de grill avec une première surface ;
un deuxième plateau (20) de grill, concentrique au premier plateau de grill et superposé au-dessus de ce premier plateau, avec une deuxième surface plus petite que ladite première surface;
un troisième plateau (30) de grill, concentrique au premier et au deuxième plateau de grill et superposé au-dessus du deuxième plateau de grill, avec unetroisièmesurface plus petite que ladite deuxième surface.

## Description

### Domaine technique

La présente invention concerne une surface à griller, c'est-à-dire une surface sur laquelle des aliments à griller peuvent être disposés pour les griller. La présente invention concerne également un grill muni d'une base et d'une telle surface à griller. La présente invention concerne en particulier, mais pas exclusivement, un grill de table.

### Etat de la technique

On connait différents grills de table permettant à des convives de griller eux-mêmes, de façon conviviale et selon leurs goûts, de la nourriture à table. On connait par exemple des grills à viande munis d'un plateau formant une surface à griller chauffée par du charbon, un corps de chauffe électrique, des bougies, etc, et sur lesquelles des convives peuvent griller des pièces de viande ou des saucisses. Les grills à charbonnade sont similaires, mais la surface à griller est dans ce cas généralement constituée par une pierre. Les fours à raclette permettent de faire fondre du fromage, soit sous forme de portions de meules, ou de tranches souvent disposées dans des poêlons individuels. Les fours à crêpes permettent de préparer simultanément plusieurs crêpes de petits diamètres. On connait aussi des woks et des planchas de table.

Tous ces dispositifs se caractérisent par une surface à griller sur un seul plan, essentiellement horizontale et que les convives doivent se partager pour y déposer leurs aliments. L'encombrement de ces grills connus est donc important, et la place à disposition pour chaque convive est limitée.

Afin de résoudre ce problème d'encombrement, on connait aussi des chapeaux tartares, c'est-à-dire des grills munis d'une surface à griller en forme de tronc de cône inversé sur laquelle les convives peuvent accrocher des aliments au moyen de petits crochets. Il est cependant difficile de faire tenir des aliments sur ces surfaces non horizontales. Par ailleurs, les jus et la graisse s'écoulent le long des parois du chapeau, en sorte que les aliments peuvent avoir tendance à sécher lors de la cuisson. Enfin, le nettoyage de ces chapeaux tartares est peu pratique.

### Bref résumé de l'invention

Un but de la présente invention est de proposer un grill de table exempt des limitations des dispositifs ci-dessus.

Selon l'invention, ces buts sont atteints notamment au moyen d'une surface à griller comportant :
un premier plateau de grill avec une première surface ;
un deuxième plateau de grill, concentrique au premier plateau de grill et superposé au-dessus de ce premier plateau, avec une deuxième surfaceinférieure à ladite première surface ;
un troisième plateau de grill, concentrique au premier et au deuxième plateau de grill et superposé au-dessus du deuxième plateau de grill, avec une troisième surface inférieure à ladite deuxième surface.

Cette surface à griller présente notamment l'avantage de comporter plusieurs plateauxcoaxiaux les unes au-dessus des autres, la surface totale à disposition pour griller étant plus grande que la surface du plateau de base. Dans un mode de réalisation, la surface totale à disposition pour griller est comprise entre 1,2 et 1,8 fois la première surface du premier plateau, par exemple 1,4 fois la surface du premier plateau.

Dans un mode de réalisation, les différents plateaux sont de forme annulaire ou ronde pour le plateau supérieur tout en haut. Les plateaux peuvent aussi d'avoir d'autres formes, par exemple carrée, rectangulaire, polygonale, ou de fantaisie.

Dans un mode de réalisation, la surface à griller comporte :
un premier plateau de grill de forme annulaire avec un premier rayon interne et un premier rayon externe ;
un deuxième plateau de grill de forme annulaire, concentrique au premier plateau de grill et superposé au-dessus de ce premier plateau, avec un deuxième rayon interne inférieure au premier rayon interne et un deuxième rayon externe supérieur au premier rayon interne mais inférieure au premier rayon externe ;
un troisième plateau de grill de forme annulaire ou ronde, concentrique au premier et au deuxième plateau de grill et superposé au-dessus du deuxième plateau de grill, avec un troisième rayon externe supérieur au deuxième rayon interne mais inférieure au deuxième rayon externe.

La surface à griller à des dimensions adaptées pour la poser sur une table en permettant à plusieurs convives de faire griller leur nourriture eux-mêmes, depuis tous les côtés.

Les différents plateaux peuvent être reliés les uns aux autres par des surfaces de liaison en forme de troncs de cônes inversés, afin de relier le diamètre intérieur de chaque plateau sauf le dernier au diamètre externe du plateau juste au-dessus.

Dans un mode de réalisation, la surface à griller comporte une première surface de liaison entre le premier rayon interne et le deuxième rayon externe, la première surface de liaison étant une surface de révolution concave, et une deuxième surface de liaison entre le deuxième rayon interne et le troisième rayon externe, la première surface de liaison étant une surface de révolution concave. L'utilisation de surfaces de révolution concaves, au lieu de troncs de cônes inversés, permet de réduire le risque que les aliments à griller ne touchent et n'adhèrent contre les surfaces de liaison.

Afin d'augmenter encore la surface à disposition pour griller, la surface à griller peut comporter plus de plateaux superposés, par exemple un quatrième plateau au-dessus du troisième plateau.

Les plateaux sont avantageusement concaves, par exemple en forme de bol. Cela permet aux liquides, par exemple à la graisse, au jus, au sang des aliments à griller, de rester sur le plateau et de s'accumuler davantage vers le centre ou vers le rayon interne du plateau.

Les plateaux pourraient aussi être plats, pour une réalisation plus économique.

La chaleur est fournie au plateau par un élément de chauffe logé au moins en partie en-dessous du premier plateau. L'élément de chauffe peut être logé dans une base sur laquelle la surface à griller comportant les plateaux et les surfaces de liaison décrits plus haut est simplement posée. La surface à griller constitue de préférence un ensemble amovible afin de pouvoir la retirer de la base et la laver aisément. La chaleur peut être fournie par un corps de chauffe électrique en contact direct avec le plateau ou avec des éléments directs en contact avec les plateaux, de manière à transmettre l'énergie de manière optimale par convexion au travers d'éléments métalliques uniquement.

Les différents plateaux avec leurs surfaces de liaison sont de préférence réalisés sous forme monobloc; les plateaux ne peuvent donc plus être séparés les uns des autres après fabrication, ou du moins pas sans nécessiter un démontage. Cela facilite l'installation de la surface à griller sur sa base.

Le grill est avantageusement agencé pour générer une température du premier plateau supérieure à la température des autres plateaux. Cela permet de choisir la température de grillage, et par exemple de placer certains aliments requérant une température de grillage élevée sur les plateaux inférieurs, et d'autres aliments nécessitant une température plus basse sur les plateaux supérieurs.

L'élément de chauffe peut consister en un corps de chauffe électrique. Il est aussi possible d'employer un brûleur à gaz, du charbon, etc.

Les plateaux sont avantageusement des plateaux métalliques, par exemple en fonte, en aluminium, en inox, etc. Ils peuvent être revêtus d'un traitement de surface anti-adhésion, par exemple de téflon. Les plateaux peuvent être liés aux surfaces de liaison par sertissage. Les plateaux peuvent être fabriqués par poinçonnage. Les surfaces de liaison 11, 21, 31, peuvent être fabriqués par repoussage.

Le grill complet peut comporter une surface à griller montée sur une base. Le plateau de grill inférieur peut être disposé au-dessus de labase qui peutcomporter un élément de chauffe. Un espace peut être disposé entre cette base et le plateau inférieur de la surface à griller pour y insérer des poêlons de grill, la nourriture dans ces poêlons étant chauffée au moins en partie par le dessus.

### Brève description des figures

Des exemples de mise en oeuvre de l'invention sont indiqués dans la description illustrée par les figures annexées dans lesquelles :

La figure 1 illustre une vue de côté de l'ensemble du dispositif.

La figure 2 illustre une vue de côté de la surface à griller.

### Exemple(s) de mode de réalisation de l'invention

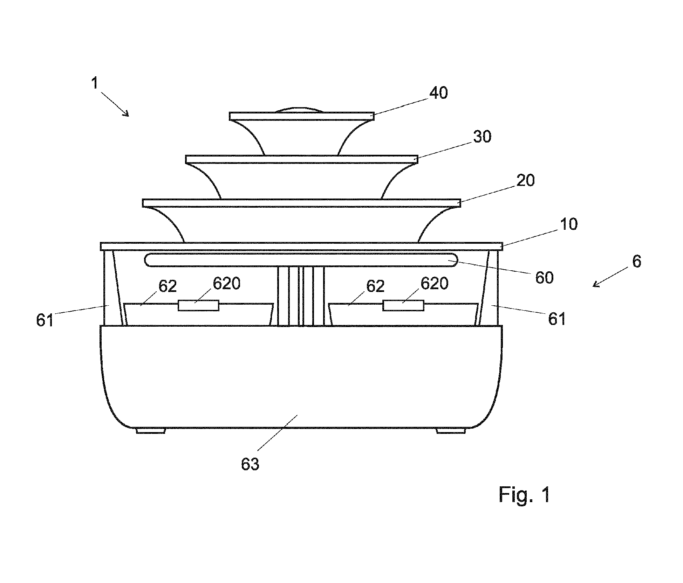

Un exemple de grill selon l'invention est illustré sur la figure 1. Il comporte essentiellement une surface à griller 1 sur laquelle les aliments à griller peuvent être posés, ainsi qu'une base 6 destinée notamment à produire la chaleur nécessaire à griller les aliments. Dans cet exemple, la base 6 comporte un élément de chauffe 60 sous forme de corps de chauffe électrique ; d'autres moyens de chauffage, y compris par exemple un élément de chauffe à gaz, au charbon de bois, etc peuvent aussi être mis en oeuvre. La surface à griller 1 est posée sur la base 6, le corps de chauffe 60 étant au moins partiellement en-dessous du plateau inférieur 10. Il est aussi possible de réaliser un grill avec un élément de chauffe à l'intérieur de la surface à griller 1, ou partiellement logé à l'intérieur.

La surface à griller 1 est posée de manière amovible sur des pieds 61 au-dessus du corps 63 de la base 6. La chaleur de l'élément de chauffe 60 est transmise à cette surface à griller 1 soit directement par convexion, ou par rayonnement. Comme l'élément de chauffe est proche du plateau inférieur 10, voir éventuellement dans une variante en contact direct avec ce plateau inférieur 10, celui-ci devient plus chaud que les plateaux supérieurs 20, 30, 40 dont la température décroit progressivement. Il est ainsi possible de choisir de griller ses aliments à différentes températures sur le même grill, simplement en choisissant le plateau sur lequel on pose ses aliments. Comme le plateau le plus chaud est aussi le plus grand, la quantité d'aliments qui peut être grillé pendant une durée déterminée est importante. La température du corps de chauffe peut avantageusement être ajustée au moyen d'un potentiomètre ou d'un autre bouton non illustré.

Les pieds 61 laissent subsister un espace entre le corps 63 et la surface à griller 1, assez grand pour y loger des poêlons 62 permettant à chaque convive de griller des portions individuelles d'aliments, par exemple des portions de raclette ou d'autres aliments. Chaque poêlon est muni d'une poignée 620 permettant de l'insérer ou de le sortir individuellement du grill.

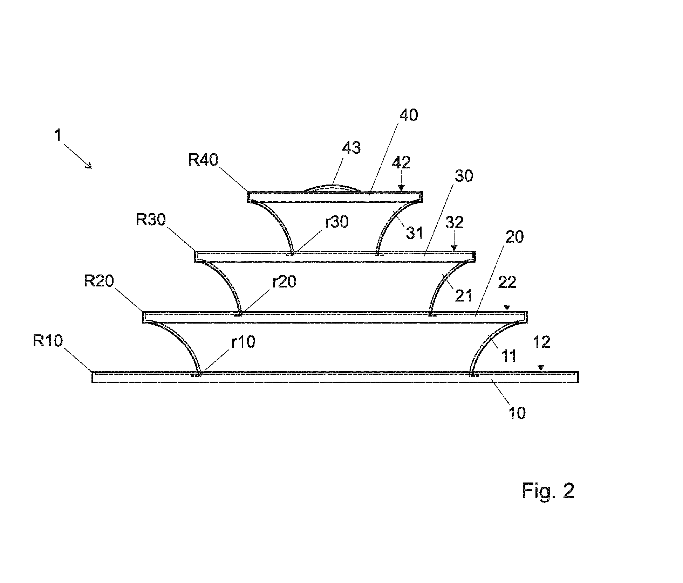

La surface à griller 1 est illustrée de manière plus détaillée sur la figure 2. Il comporte dans cet exemple 4 plateaux concentriques 10, 20, 30, 40 superposés. Des surfaces à griller avec 3 plateaux, ou avec 5, 6 ou même un nombre plus important de plateaux, peuvent être réalisées.

Le plateau inférieur 10 a une forme annulaire avec un diamètre externe R10 et un diamètre interne r10. Le deuxième plateau annulaire 20 a un diamètre externe R20 inférieur à R10, mais supérieur à r10. Le troisième plateau annulaire 30 a un diamètre externe R30 inférieur à R20, mais supérieur à r20. Le dernier plateau, ici le quatrième plateau 40, est circulaire avec un diamètre externe R40 inférieur à R30, mais supérieur à r30. Ce dernier plateau peut être surmonté d'une portion hémisphérique convexe 43.

Les plateaux sont reliés entre eux par des surfaces de liaison 11, 21, 31. Par exemple, le rayon interne r10 du premier plateau 10 est relié au rayon externe du deuxième plateau 20 par la surface de liaison 11, et ainsi de suite. Les surfaces de liaison peuvent être en forme de troncs de cône inversés, ou avantageusement comme illustré sur la figure 2 avoir des flancs de révolution légèrement concaves, afin de réduire le risque de contact et d'adhésion de la nourriture posée sur un plateau contre la surface de liaison adjacente.

Un anneau soudé (non illustré) sur le plateau supérieur 40 peut servir comme poignée pour porter la surface à griller.

La face supérieur 12, 22, 32, 42 des différents plateaux 10, 20, 30, 40 est avantageusement concave, en forme de bol, ce qui permet de retenir les liquides sur les plateaux et d'éviter un écoulement sur le plateau inférieur.

La surface à griller est avantageusement réalisée dans un matériau bon conducteur de chaleur, par exemple dans un métal tel que la fonte, l'aluminium, l'inox, etc. Au moins la face supérieure des plateaux peut être recouverte d'un revêtement anti-adhésion, par exemple de téflon.

Les plateaux 10, 20, 30, 40 peuvent être obtenus par poinçonnage ou étampage à partir d'une plaque de métal. Les surfaces de liaison 11, 21, 31 peuvent être obtenues par repoussage. Les surfaces de liaison peuvent être serties sur les plateaux, et/ou soudés.

## Revendications

1. Surface à griller comportant :I
un premier plateau (10) de grill avec une première surface ;
un deuxième plateau (20) de grill concentrique au premier plateau (10) de grill et superposé au-dessus de ce premier plateau, avec une deuxième surfaceinférieure à ladite première surface ;
un troisième plateau (30) de grill, concentrique au premier et au deuxième plateau (10, 20) de grill et superposé au-dessus du deuxième plateau (20) de grill, avec une troisième surface inférieure à ladite deuxième surface.

2. Surface à griller selon la revendication 1, lesdits plateaux étant de forme annulaire ou ronde.

3. Surface à griller selon la revendication 2, ledit premier plateau (10) ayant une forme annulaire avec un premier rayon interne (r10) et un premier rayon externe (R10) ;
le deuxième plateau (20) ayant une forme annulaire avec un deuxième rayon interne (r20) inférieure au premier rayon interne (r10) et un deuxième rayon externe (R20) supérieur au premier rayon interne (r10) mais inférieure au premier rayon externe (R10) ;
le troisième plateau (30) ayant une forme annulaire ou ronde avec un troisième rayon externe (R30) supérieur au deuxième rayon interne (r20) mais inférieure au deuxième rayon externe (R30).

4. Surface à griller selon la revendication 3, comportant une première surface de liaison (11) entre le premier rayon interne (r10) et le deuxième rayon externe (R20), la première surface de liaison étant une surface de révolution concave,
et une deuxième surface de liaison (21) entre le deuxième rayon interne (r20) et le troisième rayon externe (R30), la deuxième surface de liaison étant une surface de révolution concave.

5. Surface à griller selon la revendication 3, comportant une première surface de liaison entre le premier rayon interne (r10) et le deuxième rayon externe (R20), la première surface de liaison étant en forme de tronc de cône inversé,
et une deuxième surface de liaison entre le deuxième rayon interne (r20) et le troisième rayon externe (R30), en forme de tronc de cône inversé.

6. Surface à griller selon l'une des revendications 1 à 5, comportant un quatrième plateau (40) de grill superposé au-dessus dudit troisième plateau (30) et concentrique audit troisième plateau, la surface du quatrième plateau étant inférieure à la surface dudit troisième plateau.

7. Surface à griller selon la revendication 6, le troisième plateau (30) de grill ayant une forme annulaire avec un troisième rayon interne (r30), le quatrième plateau (40) ayant une forme ronde, concentrique au premier, au deuxième et au troisième plateaux (10, 20, 30) de grill et superposé au-dessus du troisième plateau (30) de grill, avec un quatrième rayon externe (R40) supérieur au troisième rayon interne (r30) mais inférieure au troisième rayon externe (R30).

8. Surface à griller selon l'une des revendications 1 à 7, la face supérieure desdits plateaux (10, 20, 30, 40) étant concaves.

9. Surface à griller selon l'une des revendications 1 à 8, les différents plateaux formant un ensemble monobloc.

10. Surface à griller selon l'une des revendications 1 à 9, lesdits plateaux (10, 20, 30, 40) étant des plateaux métalliques sertis sur des surfaces de liaison entre plateaux (11, 21, 31).

11. Surface à griller selon l'une des revendications 4 à 10, lesdites surfaces de liaison (1, 21, 31) étant fabriquées par repoussage.

12. Grill comportant une surface à griller (1) selon l'une des revendications 1 à 11 et une base (6) comportant un élément de chauffe (60) logé au moins en partie en-dessous du premier plateau (10).

13. Grillselon la revendication 12, **caractérisé en ce que** ladite surface à griller (1) forme un ensemble monobloc monté de manière amovible au-dessus de ladite base (6).

14. Grillselon la revendication 13, un espace étant disposé entre ladite base et ledit plateau pour y insérer des poêlons de grill (62).

15. Grillselon l'une des revendications 12 à 14, ledit élément de chauffe (60) étant agencé pour générer une température du premier plateau (10) supérieure à la température des autres plateaux (20, 30, 40).

16. Grillselon l'une des revendications 12 à 15, ledit élément de chauffe (60) consistant en un corps de chauffe électrique.
